# EUROPEAN PATENT APPLICATION

(11) **EP 3 872 671 A1**
(43) Date of publication of application: **01.09.2021**
(21) Application number: 20159986.7
(22) Date of filing: 28.02.2020
(51) Int. Cl.: G06F 21/74

(54) **SECURE KEY MANAGEMENT SYSTEM**

(71) Applicant: Hensoldt Cyber GmbH, 82024 Taufkirchen (DE)
(72) Inventor: Zeh, Alexander, 80333 Munich (DE); Peter, Michael, 85521 Ottobrunn (DE)
(74) Representative: LifeTech IP Spies & Behrndt Patentanwälte PartG mbB

(57) **Abstract**

A secure key management system includes: a plurality of components (110), each component being associated with one or more dedicated function; a core component (120) representing a root for all components (110) so that each component (111, 112, 113, ...) is a descendent component of the core component (120), a line of descent defining trusted components (110); at least one crypto module (130); and a control unit (140) with a micro-kernel-based operating system for enforcing a security policy. The control unit (140) is configured: to control the core component (120), and to allow an access to the at least one crypto module (130) directly only by one or more dedicated components of the plurality of components (110).

## Description

The present invention relates to a secure key management system and a method for securely managing keys and, in particular, to a capability-based secure key management, wherein the key(s) refer to key material used in cryptography.

The security plays an increasingly important role in modern communication and involves in particular two aspects: (i) to ensure a secure connection establishment, and (ii) to ensure a secure data transfer. The connection establishment employs typically asymmetric cryptography (e.g. for the authentication), whereas a secure data transfer is typically based on symmetric cryptography (like a stream cipher). The access to cryptographic key material needs to be separated and protected to maintain a high level of security, particularly in systems where several communication channels can be established.

A system may include different components and a potential threat actor may exploit a vulnerability in one of the components. For example, depending on the privilege of the component, the attacker may widen the scope of an attack by extending its reach to other parts of the system. If there is a weak isolation, the attacker may succeed in compromising the complete system.

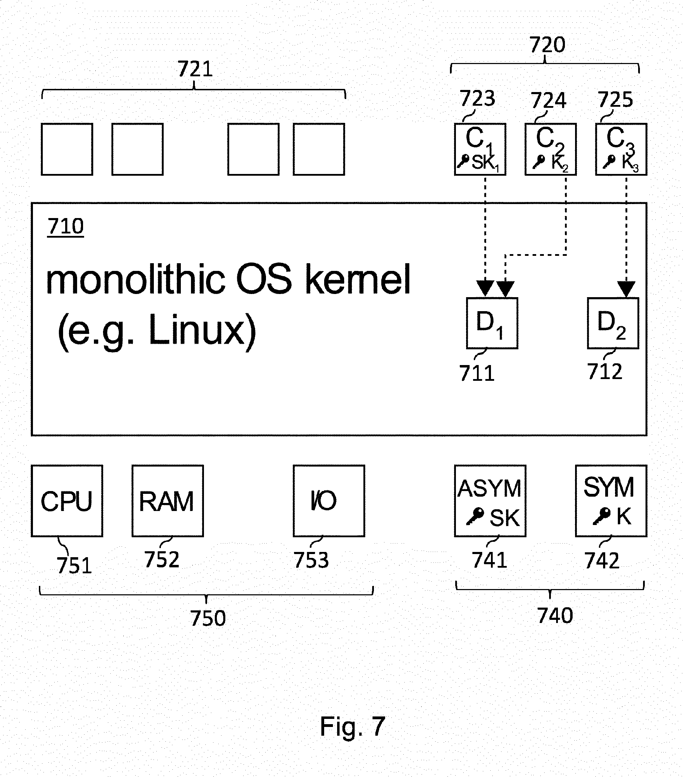

**Fig. 7** depicts schematically a conventional system based on a monolithic operating system kernel 710 such as a Linux kernel, wherein the system kernel 710 includes specific device drivers 711, 712. Applications 720, 721 may run on top of the system kernel 710 and may have access to the device drivers 711, 712. The applications 720 may include, for example, a first application 723 using a secret key SK1, a second application 724 using a key K2 and a third application 725 using a key K3. In addition, there are further applications 721 which again rely on the underlying operating system 710.

The operating system kernel 710 is using hardware components 740, 750 such as a CPU 751, a RAM memory 752 and input/output interface(s) 753. In addition, the system may have particular dedicated hardware components 740 for encrypting/decrypting. These hardware components may include an asymmetric cryptographic component 741 using a secret key SK (of a pair, which also comprises a public key PK) and a symmetric cryptographic component 742 using a key K.

The isolation between the applications components 720, 721 would be limited to the means available under the employed operating system 710. In general, no isolation can be ensured from the device drivers 711, 712. In addition, the system kernel 710 may or may not ensure an isolation (including discretionary access control) for the applications 720, 721. A source of insecurity in conventional systems relates to a lack of robust application isolation - especially in the presence of highly-privileged attackers such as attackers with root privileges.

Therefore, the depicted system can provide only a limited level of security, because the monolithic operating system is not able to prevent attacks of highly-privileged attackers.

Hence, there is a demand for alternative systems which ensure a high level of security, in particular in conjunction with a key management, to enable secured communication as needed.

### SUMMARY OF THE INVENTION

At least some of the above-mentioned problems are solved by a secure key management system according to claim 1, a method for securely managing keys according to claim 13, and a software program product according to claim 14. The dependent claims refer to further advantageous realizations for the subject matters of the independent claims.

The present invention relates to a system for a secure key management system. The system comprises a plurality of components, a core component, at least one crypto module, and a control unit. Each component is associated with one or more dedicated function. The core component represents a root for all components so that each component is a descendent component of the core component and a line of descent defines (a) trusted component(s). The control unit includes a micro-kernel-based operating system for enforcing a security policy and is configured to control the core component, and to allow an access to the at least one crypto module directly only by one or more dedicated components of the plurality of components.

Optionally, the at least one crypto module may include at least one cryptographic hardware accelerator and may be configured to provide at least one of the following functions: to encrypt data, to decrypt data, to sign data, to verify data. The encryption/decryption may be symmetric or asymmetric.

Optionally, the control unit is configured to enforce the security policy by assigning and managing rights (capabilities) to each of the components including the right to establish a communication to any other component of the plurality of components, wherein the components are unable to alter the rights.

Optionally, the plurality of components includes a first device driver component and a second device driver component, each of them being a different child component or a descendent of a different child component of the core component. In addition, the at least one crypto module may include a first crypto module being only dedicated to the first device driver component and a second crypto module being only dedicated to the second device driver component. According to further embodiments, more than two device driver components may be present for other encryptions/decryptions and/or to sign and/or verify data.

Optionally, the control unit is further configured to assign a right to enable a transfer of a key from the first device driver component to the second device driver component or vice versa without exposing the transferred key to other components.

Optionally, the control unit is configured to ensure that the device driver components are only reachable from other components through a communication established in accordance with the rights managed by the control unit. This can be ensured by assigning the rights or capabilities accordingly.

Optionally, the plurality of components includes further one or more application components with the right to establish a communication to the first device driver component and/or to the second device driver component.

Optionally, the first device driver component and to the second device driver component are configured to assign an identification to an application component that established the communication.

Optionally, a use-only key is associated with one of the application components and stored in one of the device driver components and/or in the crypto module to which the one device driver component has access. The one application component may then be configured to communicate a plaintext to the one device driver component and the one device driver component may be configured to perform at least one of the following steps:
- to identify, based on the identification assigned to one the application component, the crypto module for encrypting or decrypting and/or signing and/or verifying the plaintext;
- to send the plaintext or ciphertext to the identified crypto module for encrypting or decrypting and/or signing and/or verifying the plaintext;
- to send the use-only key to the identified crypto module, if the use-only key is not stored in the identified crypto module;
- to receive the encrypted or decrypted and/or signed and/or verified plaintext or ciphertext from the identified crypto module;
- to forward the encrypted or decrypted and/or signed and/or verified plaintext or plaintext to the one application component.

According to embodiments, multiple applications are allowed to (securely) use hardware (e.g. the crypto modules) with limited capabilities by way of a particular device driver component.

Optionally, a key is stored in or accessible by the first device driver component, but may not be directly assessible by the one application component. The second device driver component may be configured:
- to receive, from the first device driver component, the key together with contextual information to establish the association of the key with the one application component;
- to receive a plaintext from the associated application component;
- to send the plaintext, and if needed also the key, to the second crypto module associated to the second device driver for encrypting and/or signing and/or verifying the plaintext;
- to receive the encrypted and/or signed and/or verified plaintext from the associated second crypto module; and
- to forward the encrypted (or signed or verified) plaintext to the associated application component.

Optionally, another application component is configured to make available the key, for example, by
- sending input data to first device driver component;
- in response thereto, sending the input data from the first device driver component to the first crypto module associated with the first device driver component; and
- generating the key based on the input data and transmitting the key from the associated crypto component to the first device driver component.

According to embodiment the communication between the components is strictly enforced by the capabilities implemented in the hierarchical system. Therefore, the component sending the input may not be known to the other component. However, one of the components can instruct another component to generate a key on its behalf and transfer it to a component to which it has access.

Optionally, the at least one crypto module is configured to encrypt data based on at least one cryptographic key which is accessible from and stored in the device driver components or in an external storage or are generated by a key generator based on source data.

Optionally, the plurality of components and the core component are implemented as software modules.

Embodiments relate also to a method for securely managing keys. The method comprises:
- associating a plurality of components with respective one or more dedicated function;
- establishing a core component representing a root for all components so that each component is a descendent component of the core component, a line of descent defining trusted components;
- enabling data processing by at least one crypto module;
- enforcing a security policy by a control unit with a micro-kernel-based operating system by:
   controlling the core component, and
   allowing an access to the at least one crypto module by only one component of the plurality of components to ensure the secure key management.

The data processing may include one or more of the following: encrypting data, decrypting data, signing data, verifying data.

This method may also be implemented in software or a computer program product. Thus, the present invention relates also to a computer program product having a program code stored thereon, which performs the above-mentioned method, when the program code is executed on a computer or processor.

Embodiments provide in particular the advantage that a simplified hardware can be used, because there is no pre-partitioning of hardware resources needed. Since there is formal verification of the driver(s), the security can be maintained at a high level. Even attacker with root privileges cannot compromise the system, because the system is designed by the defined capabilities (rights) that strictly enforce the underlying communication policy and prevent any non-authorized communications. It further enables attack resilience in that the security of the sensitive keys cannot be compromised by successful software attacks, as long as these occur in non-critical components.

### BRIEF DESCRIPTION OF DRAWINGS

Various embodiments of the present invention will be described in the following by way of examples only, and with respect to the accompanying drawings, in which:
- Fig. 1: depicts a secure key management system according to an embodiment of the present invention.
- Fig. 2: illustrates the difference between the monolithic kernel-based operating system in comparison with a microkernel-based operating system employed by embodiments of the present invention.
- Fig. 3: depicts a capability-based access scheme based on a hierarchical structure employed by embodiments.
- Fig. 4: depicts a capability-based secure(d) data flow for secret use-only keys to an asymmetric cryptography accelerator used in embodiments.
- Fig. 5: depicts a capability-based secure(d) data flow for use-only keys to a symmetric cryptography accelerator used in embodiments.
- Fig. 6: depicts a flow chart for a method for securely managing keys according to an embodiment.
- Fig. 7: depicts a conventional system for a cryptographic key management.

### DETAILED DESCRIPTION

Various examples will now be described more fully with reference to the accompanying drawings in which some examples are illustrated.

The terminology used herein is for the purpose of describing illustrative examples only and is not intended to be limiting. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements and/or components, but do not preclude the presence or addition of one or more other features, steps, operations, elements, components and/or groups thereof.

Unless otherwise defined, all terms (including technical and scientific terms) used herein have the same meaning as commonly understood by one of ordinary skill in the art to which examples belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

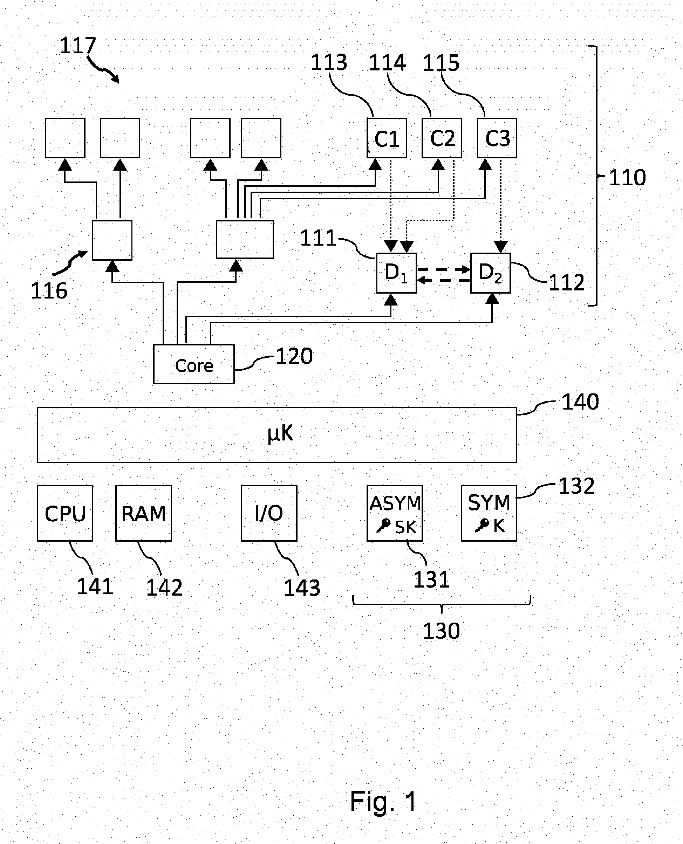

**Fig. 1** depicts a system that is able to provide a secure key management according to an embodiment of the present invention. The system includes a plurality of components 110, a core component 120, at least one crypto module 130, and a control unit 140. Each component 111, 112, 113, ... of the plurality of components 110 is associated with one or more dedicated function. The core component 120 representing a root for all components 110 so that each component 111, 112, 113, ... is a descendent component of the core component 120. The solid lines are lines of descents, that trust its ancestors. For example, child components trust its parents, but in general not vice versa. The control unit includes the microkernel 140 (µK) as part of the operating system. The operating system may or may not include further components. For example, the core component 120 and further non-application components (such as the components 111, 112) may be part of the operating system that enforces a security policy. The core component 120 140 is configured allow or to prevent an access of its descendants (recursively) to the at least one crypto module 130. This access may be allowed only to one (or by more) dedicated component(s) of the plurality of components 110.

The depicted system can be distinguished in hardware components 130, 141, 142, 143 and software components 110, 120, 140, the constituting a general microkernel-based operating system. The hardware components 130, 141, ... may include as crypto modules a first cryptographic hardware accelerator 131 (e.g. for asymmetric cryptography; ASYM) and a second cryptographic hardware accelerator 132 (e.g. for symmetric cryptography; SYM). The hardware components include further a CPU 141, a RAM 142, input/output interface(s) 143. The software components 110, 120, and microkernel 140 define a capability-based trusted computing system. The cryptographic hardware accelerators 131, 132 may be able not only to encrypt and/or decrypt plaintext but also to verify and/or to sign data.

In contrast to the conventional system of Fig. 7, the device driver components 111, 112 that are able to control dedicated hardware such as the first and second cryptographic hardware accelerators 131, 132 are not part of the operating system kernel, but are components 110 integrated in the tree structure of the trusted components. The components that trust each other are the descendants along a line starting at the core component 120 as illustrated by solid lines. This defines also the control capability.

The dashed lines are communication capabilities of the software components 110. For example, the first software component 113 (e.g. related to a first application Ci) may be capable of communicating with the first device driver 111 (e.g. related to a first device D1). Likewise, the second software component 114 (e.g. related to a second application C2) may be capable of communicating with the first driver module 111, whereas the third component 115 (e.g. related to a third application C3) is capable of communicating only with the second hardware module 112 (e.g. related to a second device D2). Each application component 113, 114, 115 may thus only communicate with one device driver 111, 112, but not with both or multiple.

Moreover, the first device driver module 111 and the second device driver module 112 may be capable of exchanging data with one another, which may be used to exchange keys needed for encryption/decryption. The cryptographic accelerators 130 may be co-processors designed to perform cryptographic operations efficiently, e.g. far more efficient than the CPU 141.

Therefore, the system of Fig. 1 defines an architecture that ensures secure key management in a µK-based operating system, wherein only a dedicated software component 113, 114, ... can directly access corresponding cryptographic hardware accelerators 131, 132, ... and the key material. According to embodiments, the device drivers 111, 112 with direct access to accelerator hardware 131, 132 are isolated components. They are children (direct descendants) of the core component 120 and have no own descendants. According to the enforced security policy, capabilities are assigned such that the communications of the applications C1, C2, C3 (doted lines) are restricted to the drivers D1, D2, wherein the drivers D1, D2 are able to securely assign an identity to the sender (on incoming communications).

It is understood that the present invention shall not be limited on the particular design of Fig. 1. For example, additional hardware accelerators (SYM and/or ASYM) as well as addition device drivers for further devices (e.g. further hardware accelerators) may be present.

**Fig**. **2** illustrates the difference between an operating system based on a monolithic kernel in comparison with a microkernel-based operating system used by embodiments. A microkernel can be defined as a near-minimum amount of software that can provide mechanisms needed to implement an operating system (OS), wherein these mechanisms may include low-level address space management, thread management, and basic inter-process communication (IPC).

The monolithic kernel-based operating system 710 as shown of the left-hand side (see also Fig. 7) uses hardware components 740, 750 and includes various components such as device drivers or dispatchers 711, 712, a scheduler or a virtual memory 713, an inter-process communication (IPC), a file system 714 and a virtual file system (VFS) 715. This operating system 710 can block system calls of applications 720 running on top of the operating system 710.

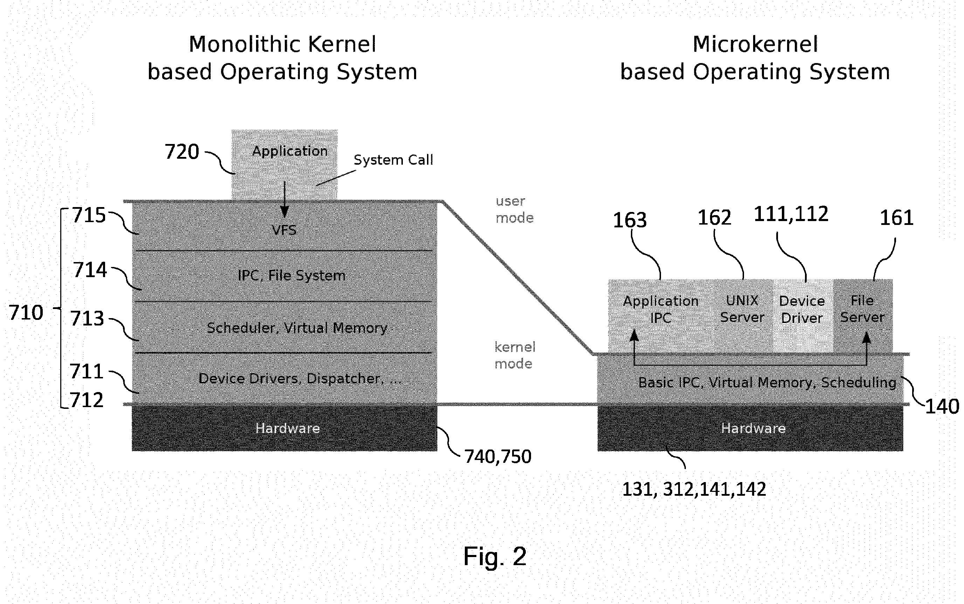

When compared to the monolithic kernel-based operating system on the left-hand side, the µK-based operating systems 140 on the right-hand side of Fig. 2 may use hardware components 131, 132, 141, 142, ... on which the operating system is running. However, the µK 140 includes only minimalistic components to enable applications such as the device driver 111, 112, a file server 161, an exemplary UNIX server 162 and an application 163, which can use services provided by the server 162 by sending and receiving messages (IPC - interprocess communication).

According to embodiments, the µK 140 that defines a near-minimum amount of software that can provide a mechanism needed to implement an operating system is the secure microkernel seL4. A main characteristics of the secure microkernel seL4 is its formal proof or formal verification as set out in: G. Klein et al. seL4: Formal Verification of an OS Kernel IEEE Proceedings of the ACM SIGOPS 22nd Symposium on Operating Systems Principles, New York, NY, USA, 2009, pp. 207-220 (see also http://doi.acm.org/10.1145/1629575.1629596). The formal proof means that this operating system kernel operates in an exactly deterministic way. Moreover, a secure microkernel employed in embodiments can be characterized as providing support of a component-based operating system using capability-based security.

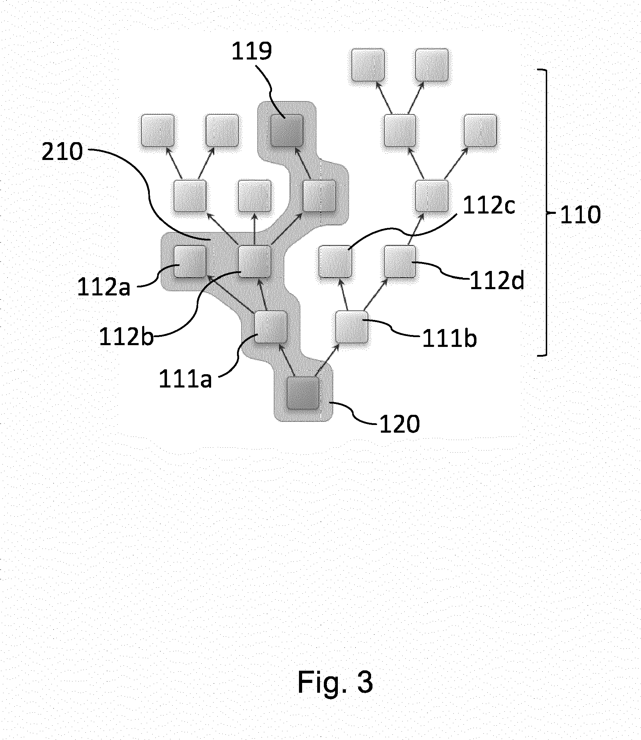

**Fig. 3** depicts a hierarchical tree structure from a trusted computing base representing the capability-based access scheme used in embodiments of the present invention. Starting from a core component 120 trusted components are formed by components 110 that are descendants in one line from the core component 120. A capability can be defined as a communicable, unforgeable token of authority and may refer to a value that references an object or component along with an associated set of access rights.

The depicted capability-based component system provides its functionality by a set of isolated components 110, 120 running on top of the (equally small) microkernel 140. Components 110, 120 can use services provided by other components 110, 120, whereas communications between the components 110, 120 are governed by capabilities. A capability is a right that is associated with a given component that is securely managed by the microkernel 140. The capability to a component is created upon its creation and originally only held by its creator. The creator can then decide to transfer this capability to other components (provided it holds capabilities allowing this).

A system designer can configure the system and distribute the capabilities such that the communication between components 110 is restricted: e.g. not allowed at all or limited to designated communication peers. Owing to the properties of the capabilities, once such a system state has been reached, the components 110 in the system are unable to change these properties. The security property persists.

In the system shown in Fig. 3, for example, the core component 120 can decide that no component 111b, 112c, 112d, ... in right branch holds a capability to any component in the left branch 111a, 112a, 112b, .... Thus, the two subsystems are isolated.

The hierarchical structure of the components 110, 120 ensures that the components 111a, 111b lower down in the tree exercise control over their children 112a, 112b, ... (and grandchildren). For a given component, all the components on the path to the root component 120 are in this component's trusted computing base (TCB). In addition, depending on the component's functionality, other components may also be in its TCB. The goal is to minimize the size of the TCB of critical components. In the example of Fig. 3, the TCB of components 120, 111a, ... , 119 is shown as shadowed components 210. For example, the core component 120 has control over all other components 110 being descendants of the core component 120. The last component 119 may trust its ancestors up to the core component 120, but not the other way around. However, dependent on the concrete configuration, also siblings (e.g. some of the application components 113, 114, 115 or the device drivers 111, 112) may trust each other. This, however, has to be explicitly be defined.

In the exemplary system of Fig. 3 the core component 120 has only two direct descendants 111a and 111b and each child 111a, 111b of the core component 120 has again two own children 112a, 112b belonging to the first child 111a, and two children 112c, 112d belonging to the second child 111b. The child component 112a has no further child components, but the child component 112b has three children components. This structure continues. However, there are no horizontal connections and the control is only provided by the parents or grandparents or any other descendants' components, i.e. along vertical direction, but not on the same level.

Coming back the system depicted in Fig. 1, all components 110 are configured as a capability-based system in that finally the core component 120 has control over all other components 110, and the children 116, 111, 112 of the core component 120 have only control over their own children (if they have any) or the grandchildren 117, 113, 114, 115 of the core component 120.

Embodiments use the support of the µK 140 for a component-based software framework, where the security capabilities are derived from the so-called core component 120 to its child-components 110 (see Fig. 1). The components 113, 114, 115 implement some applications C₁, C₂ and C₃ such as communication(s), secure(d) boot, etc.

In Fig. 1, the child software components 111, 112 of the core component 120 are (crypto) device drivers D₁, D₂ dedicated to the hardware accelerators 131 (ASYM), 132 (SYM). The main properties of the crypto device drivers D₁ (resp. D₂) are:
- they are directly and only configured by and derived from the core component 120;
- they are monopolists of access rights to the hardware accelerators (crypto modules 131, 132) and associate key material (the secret key SK of a key pair (SK, PK), where PK is the corresponding public key; or the secret key K dedicated for symmetric cryptography);
- they are only reachable from other components through capability-mediated communication;
- they hold capabilities to each other to facilitate secure key transfer without exposing the transferred key, for example to the applications C1, C2, C3, ....

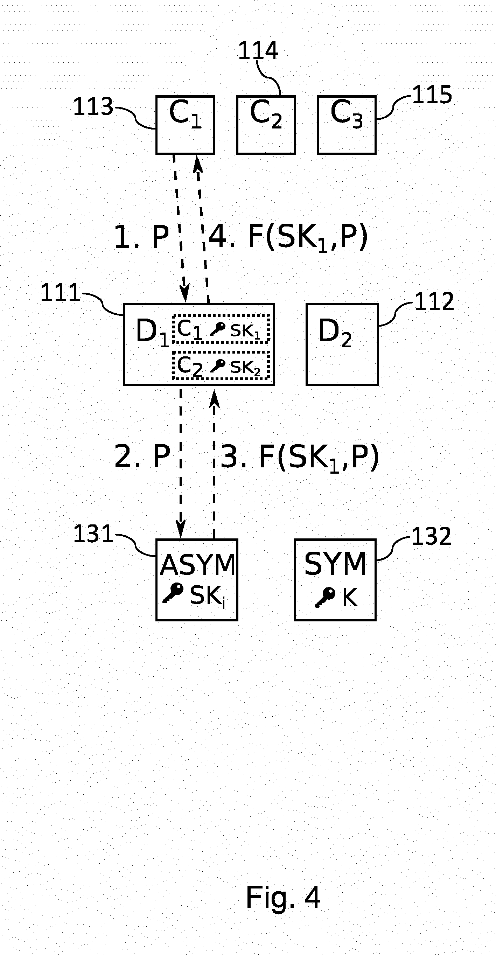

**Fig. 4** shows an exemplary embodiment for the system implementing a key management, where a device driver component 111 (here D₁) secures so-called "use-only" keys. Use-only keys can be used for asymmetric and symmetric cryptography based on the hardware cryptography accelerators (first or second crypto modules 131, 132).

First, the plaintext P is sent from the application C1 (first application component 113) to the device driver D1 (first device driver component 111). According to embodiments, the following steps are performed (e.g. by the device driver D₁):
- to look up which key SK₁ (resp. SK₂) is associated with the call of the first application C₁, resp. C₂ (each incoming call may be tagged with an unforgeable identifier, which can be used to retrieve associated information about the called application C₁, resp. C₂);
- to transfer the plaintext P and the looked-up key SK₁ or SK₂ to the hardware accelerator ASYM (e.g. the first crypto module 131); the key SK1 or SK2 can also be preloaded in the hardware accelerator 131;
- to trigger an asymmetric cryptographic operation F(SKi,P) in the hardware accelerator ASYM to generate encrypted or signed plaintext F(SKi,P);
- to transfer the result(s), the encrypted or signed plaintext F(SKi,P), back to the application C1 that had requested the operation (and only to this application).

Therefore, in order to encrypt or sign this plaintext P, the first application component 113 sends a request to the first device driver component 111, which includes an associated secret key SK1 (or any other key) for the first application component 113. Similarly, the first device driver component 111 may include also associations for other application components such as the second application component C2 associated with a second secret key SK2. In order to encrypt or sign the plaintext P of the first application C1, the first device driver component 111 sends the plaintext P to the first crypto module 131 which is responsible for encrypting or signing the plaintext P using the secret key SK1 and sends the results F(SK1, P) back to the first device driver component 111. The first device driver component 111 then sends the encrypted or signed text back to the original first application component 113.

The key association in the device driver components 111, 112 can be implemented by a table or list and may be set up when the system is configured at the beginning.

It is understood that in the same way, the second or third application components 114, 115 can employ the second device driver 112 to handle encryption of plaintext using the second crypto module 132, e.g., using different keys.

The crypto modules 131, 132 may include one or more slots for key(s), but do not necessarily store the key(s). Instead, the key(s) can be obtained from an external storage or can be generated. Moreover, the crypto modules 131, 132 may also be configured to decrypt or to sign or to verify the plaintext P received from the device driver component(s) 111, 112.

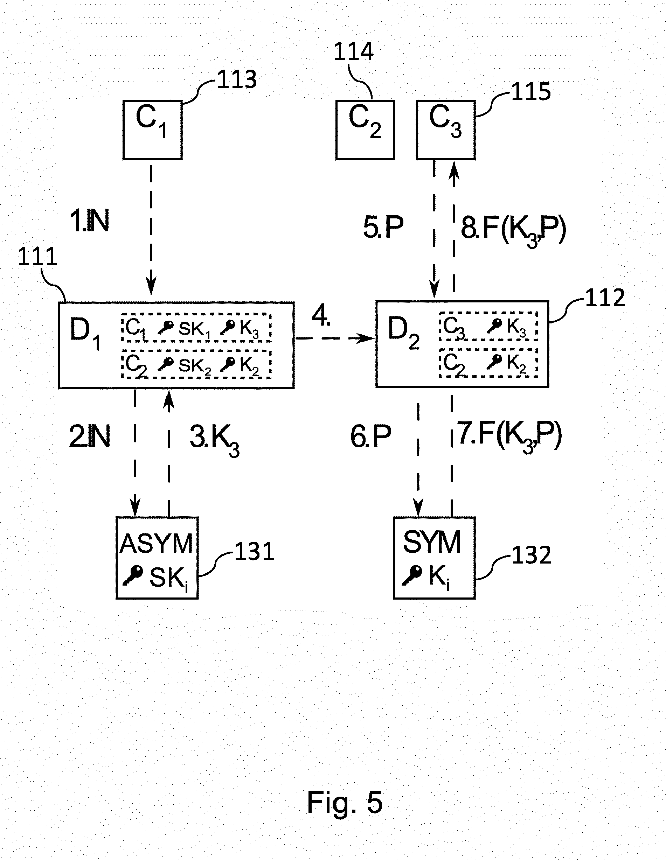

**Fig. 5** illustrates an exemplary key transfer for symmetric cryptography which is protected by the second device driver component 112 (device driver D2). In this exemplary encryption scheme a third application C₃ (third application component 115) wishes to encrypt a plaintext P with an associated key K3. However, the third application C3 can access only directly the second device driver component 112 and not (directly) the first device driver component 111, which is able to obtain the key K3 (e.g. by key-exchange mechanism using asymmetric cryptography). Hence, the third application C3 requests, for example, the first application 113 to provide the corresponding key K3 on its behalf. For this, the communication between the third application C3 and the first application C1 may be allowed.

Thus, the embodiment of Fig. 5 illustrates also how a session key K3 obtained from an asymmetric cryptography (by the crypto module 131) can be transferred from one device driver D1 to a symmetric device driver D2, where it will be used as use-only key.

In other words, in this embodiment the first device driver component 111 does not know the third application C3 (they are not capable of communicating with each other), but the first or the second application component 113, 114 are capable to communicate with the first device driver component 111 and thus can instruct them to generate a key K3 on behalf of the third application C3 and to transfer the resulting key K3 to the second device driver component 112. This is possible, since in the first device driver component 111 the generated key K3 is still associated with first application component 113. The second device driver component 112 knows that the transferred (incoming) key K3 is associated with the third application 115 (there is a corresponding association). Therefore, the third application component 115 can instruct the second device driver 112 to use the key K3 on its behalf.

Therefore, in response to the key generation request (or instruction), the first application 113 sends, in step 1, an input IN (e.g. needed for the key generation and/or determining where the key shall be delivered) to the first device driver component 111. In the first driver component 111 the first application C1 is associated with a first secret key SK1 and a key K3. Moreover, a second application C2 may be associated with a second secret key SK2 and a key K2. Therefore, upon the request from the first application C1, the first device driver component 111 associates with this first application 113 the first crypto module 131 (by loading SK1 into 131) and sends, in step 2, the input IN to the first crypto module 131 to generate the third key K3 using the (previously loaded) secret key SK1. In step 3, the third key K3 is retrieved by the first device driver module 111 and thereafter, in step 4, transmitted to the second device driver component 112 in step 4. Also in step 4, in addition to the key K3, also the context may be transmitted to the second device driver component 112 to enable the identification of the third application C3 as original requester so that an association between the transmitted key K3 and the third application C3 can be established.

The second device driver module 112 receives, in step 5, the plaintext P from the original third application C3 and provides the plaintext P, in step 6, to the second crypto module 132 together with the third key K3. The second crypto module 132 generates an encrypted text based on the third key K3 and, in step 7, this encrypted text is retrieved the second device driver 112 which in turn transmits, in step 8, the encrypted text back to the original third application C3.

It is important that according to embodiments, no key is stored in the application components 113, 114, 115, .... All key material is managed only by the device driver components 111, 112 and/or the respective crypto modules 131, 132. The device driver components 111, 112 are able to identify the keys which are associated with the respective applications C1, C2, C3 and, based thereon, forward the plaintext P to the corresponding crypto module 131, 132 together with a respective key (if the key is not present in the crypto module 131, 132) together with a request to encrypt the plaintext P. As a result, the keys are secured without any possibility that any application 113, 114, 115 can directly access any key.

As in the embodiment of Fig. 5, the key for symmetric cryptography SYM may be generated based on a secret key SK of asymmetric cryptography ASYM. This is enabled by allowing key exchanges between the device drivers 111, 112 (and only between them).

The crypto modules 131, 132 may be able to store key(s). However, at a given time, only a single key should be present in the crypto modules 131, 132. The secret keys SK can be stored on a secure storage device.

Further embodiments enable another security provision by the following: When the third application C3 requests from the second device driver component 112 the usage of a third key K3, which is not yet available (because it has to be generated), the procedure is terminated with an error message. This ensures that no application C1, C2, C3 is able to request any key for encryption. Applications may only request associated keys to use for encryption. Therefore, the exemplary third application C3 has to request first another application (e.g. the first application Ci) to generate the needed key (e.g. K3) on behalf of the third application C3. Only after the correct generation of the third key K3 (i.e. via the exemplary first application Ci) the third application C3 can request (see the 5th step) the encryption of the plaintext P by the second device driver module 112.

In summary, in this embodiment the application component C1 derives the key K3 by, e.g., an asymmetric cryptography, while another component (here C3) is using K3. For this, the following steps are executed (see Fig. 5):
- input IN to D1;
- transfer SK1 to ASYM (if not yet present in ASYM; not shown in Fig. 5, because it could be transferred in advance)
- transfer of IN to ASYM;
- D1 retrieves K3;
- D1 transfers K3 to crypto driver D2; alongside the keys, D1 also transfers the context of the keys so that D2 can establish the association between C3 and K3;
- D2 may transfer K3 to SYM (not shown in Fig. 5);
- transfer of plaintext P to D2;
- transfer of plaintext P to SYM, where the hardware unit SYM, which calculates F(K3,P) in the HW submodule; and
- D2 retrieves the result(s), which are transferred to the component C3.

Embodiments shall not be limited to particular encryptions. The encryption may be based on a symmetric encryption scheme (SYM) or an asymmetric encryption (ASYM). Examples for the symmetric encryptions are block ciphers such as AES (advanced encryption standard) and examples for asymmetric encryptions are ECC (elliptic curve cryptography) or RSA (Rivest-Shamir-Adleman). As already said, the encryption modules 131, 132 are in general hardware accelerators designed to perform theses encryptions in an efficient way (faster than the CPU 141).

As set out in detail, embodiments implement a capability system so that the key material is at any time under control of trusted components. For example, the crypto modules 131, 132 are responsible only for a subclass of applications or only for a single application to encrypt plaintext P. In addition, the applications C1, C2, C3 may access only dedicated device driver components 111, 112 to access the crypto modules 131, 132 for the encryption or decryption or verifying or signing. Since the communications are strictly enforced by the set capabilities, a given application cannot access any device driver component 111, 112.

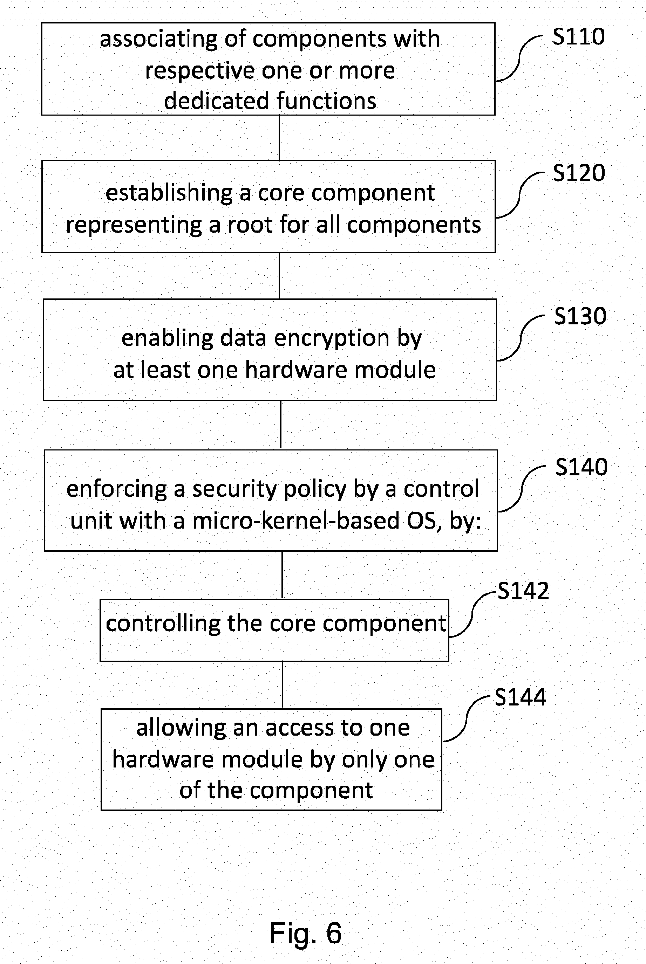

**Fig. 6** shows a flow diagram for a method for securely managing keys. The method comprises the steps of:
- associating a plurality S110 of components 110 with respective one or more dedicated function;
- establishing S120 a core component 120 representing a root for all components 110 so that each component 111, 112, 113, ... is a descendent component of the core component 120, a line of descent defining trusted components 110;
- enabling S130 data processing by at least one crypto module 130;
- enforcing S140 a security policy by a control unit 140 with a micro-kernel-based operating system by:
   controlling S142 the core component 120, and
   allowing S144 an access to the at least one crypto module 130 by only one component of the plurality of components 110 to ensure the secure key management.

This method may also be a computer-implemented method, a person of skill in the art would readily recognize that steps of the above-described method may be performed by programmed computers. Embodiments are also intended to cover program storage devices, e.g., digital data storage media, which are machine or computer readable and encode machine-executable or computer-executable programs of instructions, wherein the instructions perform some or all of the acts of the above-described methods, when executed on the a computer or processor.

Advantageous aspects of the various embodiments can be summarized as follows:
- A simplified hardware can be used, because there no pre-partitioning of hardware resources (such as hardware security module, HSM) is needed.
- A device that only supports a single context at any given time (but allows for reconfiguration) can be used on behalf of more than one application.
- There is a formal verification of the driver(s), which is facilitated by the small size of the deployed components.
- It enables attack resilience in that the security of the sensitive keys is not compromised by successful software attacks, as long as these occur in the non-critical components.

The term "context" may be understood in that it includes a setup, wherein correct keys are loaded for respective application(s)/user(s).

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

It is therefore clear that there is a plurality of possible variations. It is also clear that embodiments stated by way of example are only really examples that are not to be seen as limiting the scope, application possibilities or configuration of the invention in any way. In fact, the preceding description and the description of the figures enable the person skilled in the art to implement the exemplary embodiments in concrete manner, wherein, with the knowledge of the disclosed inventive concept, the person skilled in the art is able to undertake various changes, for example, with regard to the functioning or arrangement of individual elements stated in an exemplary embodiment without leaving the scope of the invention, which is defined by the claims and their legal equivalents, such as further explanations in the description.

### LIST OF REFERENCE SIGNS

- 110: plurality of components
- 111, 112: device driver components (child of core component)
- 113, 114, 115: application components (grandchildren of core component)
- 16: other child components of core component
- 117: other grandchild components of core component
- 19: a last component without childs
- 120: core component
- 130, 131, 132: crypto module(s) such as cryptographic accelerators
- 140: control unit
- 141, 142, 143: computing hardware (CPU, RAM, I/O)
- 210: trusted computer base (TCB) of components
- 710: monolithic OS kernel
- 711, 712: integrated device drivers of monolithic kernel
- 720, 723,...: applications of monolithic kernel
- 721, ...: other applications of monolithic kernel
- 750, 751, ...: hardware for monolithic kernel
- 740, 741, ...: crypto accelerators for monolithic kernel
- P: plaintext
- K: symmetric key(s)
- SK: secret, asymmetric key(s)
- D1, D2, ...: device(s) driver
- C1, C2, C3, ...: application(s)

## Claims

**1.** A secure key management system, comprising:
a plurality of components (110), each component being associated with one or more dedicated function;
a core component (120) representing a root for all components (110) so that each component (111, 112, 113, ...) is a descendent component of the core component (120), a line of descent defining trusted components (110);
at least one crypto module (130);
a control unit (140) with a microkernel for enforcing a security policy, the core component (120) being configured to allow access to the at least one crypto module (130) directly only by one or more dedicated components of the plurality of components (110).

**2.** The system of claim 1, wherein the at least one crypto module (130) is configured to provide at least one of the following functions: to encrypt data, to decrypt data, to sign data, to verify data.

**3.** The system of claim 1 or claim 2, wherein the core component (120) is configured to enforce the security policy by assigning and managing rights to each of the components (110) including the right to establish a communication to any other component of the plurality of components (110), the components (110) being unable to alter the rights.

**4.** The system of one of the preceding claims, wherein
the plurality of components (110) includes a first device driver component (111) and a second device driver component (112), each of them being a different child component or a descendent of a different child component of the core component (120), and
the at least one crypto module (130) includes a first crypto module (131) being only dedicated to the first device driver component (111) and a second crypto module (132) being only dedicated to the second device driver component (112).

**5.** The system according to claim 4, wherein the core component (120) is further configured to assign a right to enable a transfer of a key (K, SK) from the first device driver component (111) to the second device driver component (112) or vice versa without exposing the transferred key (K, SK) to other components.

**6.** The system according to claim 4 or claim 5, wherein
The core component (120) is configured to ensure, by the assigned rights, that the device driver components (111, 112) are only reachable from other components (113, 114, ...) through a communication established in accordance with the rights managed by the control unit (140).

**7.** The system according to one of claims 4 to 6, wherein the plurality of components (110) further includes one or more application components (113, 114, ...) with the right to establish a communication either to the first device driver component (111) or to the second device driver component (112).

**8.** The system of claim 7, wherein the first device driver component (111) and to the second device driver component (112) are configured to assign an identification to an application component (113, 114, ...) that established the communication.

**9.** The system according to claim 7 or claim 8, wherein a use-only key (SK1, SK2) is associated with one of the application components (113; 114) and stored in one of the device driver components (111; 112) or in the crypto module (131; 132) to which the one device driver component (111; 112) has access,
the one application component (113; 114) being configured to communicate a plaintext (P) to the one device driver component (111; 112),
the one device driver component (111; 112) being configured:
- to identify, based on the identification assigned to one the application component (113; 114), the crypto module (131; 132) for encrypting and/or signing the plaintext (P);
- to send the plaintext (P) to the identified crypto module (131; 132) for encrypting and/or signing the plaintext (P);
- to send the use-only key (SK1, SK2) to the identified crypto module (131; 132), if the use-only key (SK1, SK2) is not stored in the identified crypto module (131; 132);
- to receive the encrypted and/or signed plaintext from the identified crypto module (131; 132); and
- to forward the encrypted and/or signed plaintext to the one application component (113; 114).

**10.** The system according to one of claims 7 to 9, wherein a key (K₃) is stored in or accessible by the first device driver component (111) not being directly assessible by the one application component (115),
the second device driver component (112) being configured:
- to receive, from the first device driver component (111), the key (K₃) together with contextual information to establish the association of the key (K₃) with the one application component (115);
- to receive a plaintext (P) from the associated application component (115);
- to send the plaintext (P), and if needed also the key (K3), to the second crypto module (132) associated to the second device driver (112) for encrypting and/or signing the plaintext (P);
- to receive the encrypted plaintext from the associated second crypto module (132); and
- to forward the encrypted plaintext to the associated application component (115).

**11.** The system of claim 10, wherein another application component (113) is configured to make available the key (k3) by:
- sending input data (IN) to first device driver component (111);
- in response thereto, sending the input data (IN) from the first device driver component (111) to the first crypto module (131) associated with the first device driver component (111); and
- generating the key (K₃) based on the input data (IN) and transmitting the key (K₃) from the associated crypto component (131) to the first device driver component (111).

**12.** The system according to one of the preceding claims, wherein the at least one crypto module (130) is configured to encrypt data based on at least one cryptographic key (SK, K) which are accessible from and stored in the device driver components (111, 112) or in an external storage or are generated by a key generator based on source data.

**12.** The system according to one of the preceding claims, wherein plurality of components (110) and the core component (120) are implemented as software modules.

**13.** A method for securely managing keys, the method comprising:
associating a plurality (S110) of components (110) with respective one or
more dedicated function;
establishing (S120) a core component (120) representing a root for all components (110) so that each component (111, 112, 113, ...) is a descendent component of the core component (120), a line of descent defining trusted components (110);
enabling (S130) data processing by at least one crypto module (130);
enforcing (S140) a security policy by a control unit (140) with a micro-kernel-based operating system by:
controlling (S142) the core component (120), and
allowing (S144) an access to the at least one crypto module (130) by only one component of the plurality of components (110) to ensure the secure key management.

**14.** A computer program product comprising program code for carrying out the method according to claim 13 when the program code is executed on a processing unit.
